**Europäisches Patentamt**

(19) **European Patent Office**

**Office européen des brevets**

(11) Publication number: **0 163 544**
**A2**

(12) # EUROPEAN PATENT APPLICATION

(21) Application number: **85303854.5**

(22) Date of filing: **31.05.85**

(51) Int. Cl.⁴: **B 60 S 9/10**

(30) Priority: **31.05.84 GB 8413936**

(43) Date of publication of application:
**04.12.85 Bulletin 85/49**

(84) Designated Contracting States:
**AT BE CH DE FR IT LI LU NL SE**

(71) Applicant: **Salop Tool & Fixtures Limited**
**Mile Oak Industrial Estate Maesbury Road**
**Oswestry Shropshire(GB)**

(72) Inventor: **Mayer, Heinz Walter**
**Whitehouse Middleton**
**Oswestry Shropshire(GB)**

(74) Representative: **Corfield, Peter Ralph et al,**
**A. R. Davies & Co. 27, Imperial Square**
**Cheltenham, Glos. GL50 1RQ(GB)**

(54) **Caravan or trailer stabilizing & levelling system.**

(57) A stabilizing system for caravans and trailers comprising a number of individual fluid pressure actuated legs (23) to be fixed to the caravan or trailer at spaced positions and a control valve (31) for regulating the supply of fluid under pressure to the legs (23) individually or simultaneously and a pumping means for supplying fluid under pressure to the control valve (31).

FIG.2.

FIG.3.

- 1 -

"Caravan or trailer stabilizing & levelling system"

This invention relates to a system whereby a caravan or trailer can be made stable when stationery by the use of adjustable legs which rest on the ground, despite the fact the ground may be uneven.

Caravans and some trailers generally have individual stabilizing legs, one at each corner, which are commonly mechanical jacks of various kinds which are individually operated so that the caravan or trailer is stable when in use. A jockey wheel, usually fitted to the front "A" frame or similar fixture of the caravan or trailer, is also normally provided. This can be adjusted up or down to take some of the load of the parked caravan or trailer and also for fore and aft levelling. It also enables the caravan to be manoeuvred. The raising and lowering of the jockey wheel is normally accomplished through a screw system.

It is the object of the invention to provide a stabilizing system which enables individual legs to be conveniently and simply operated.

According to the invention there is provided a stabilizing system for caravans and trailers comprising a number of individual fluid pressure actuated legs designed to be fitted to a caravan or trailer at spaced positions thereon, a control valve for regulating the supply of fluid under pressure to the respective legs and a pumping means for supplying fluid under pressure to said control valve. Advantageously the control valve can be set to provide supply to the legs individually or simultaneously.

The legs may be spring urged towards their retracted positions and are arranged to be extended by application of fluid under pressure.

The control valve may also be capable of actuating a jockey wheel fluid pressure operated device.

There may be two types of fluid pressure operated legs for the purpose of stabilizing the caravan or trailer, one having a fixed horizontally operating fluid pressure cylinder and the other having a trunnion mounting at one end of its cylinder to swivel as the leg moves toward the ground. The two designs may suit different caravan or trailer chassis mountings.

The invention will now be described by way of example with reference to the accompanying drawings in which:

Figure 1 is an end elevation view of a fluid pressure operated leg for use in a system in accordance with the invention,

Figure 2 is a side elevation view of the leg,

- 3 -

0163544

Figure 3 is a cross-sectional view of a control valve used in the system,

Figure 4 is a plan view of the valve,

Figure 5 is a scrap section on the line 5-5 in Figure 4,

Figure 6 is a diagramatic representation of the control valve indicator plate,

Figure 7 is a scrap view of the side of the control valve, in the direction of arrows 7 in Figure 4,

Figure 8 is a part section view of pumping means for use in the system,

Figure 9 is a cross-sectional view on the line 9-9 in Figure 8,

Figure 10 is a diagramatic lay-out of the fluid pressure system in this example,

Figure 11 is a cross-sectionaal view of a jockey wheel which is optionally used in the system and

Figure 12 is a perspective view of an axle levelling device optionally used in the system.

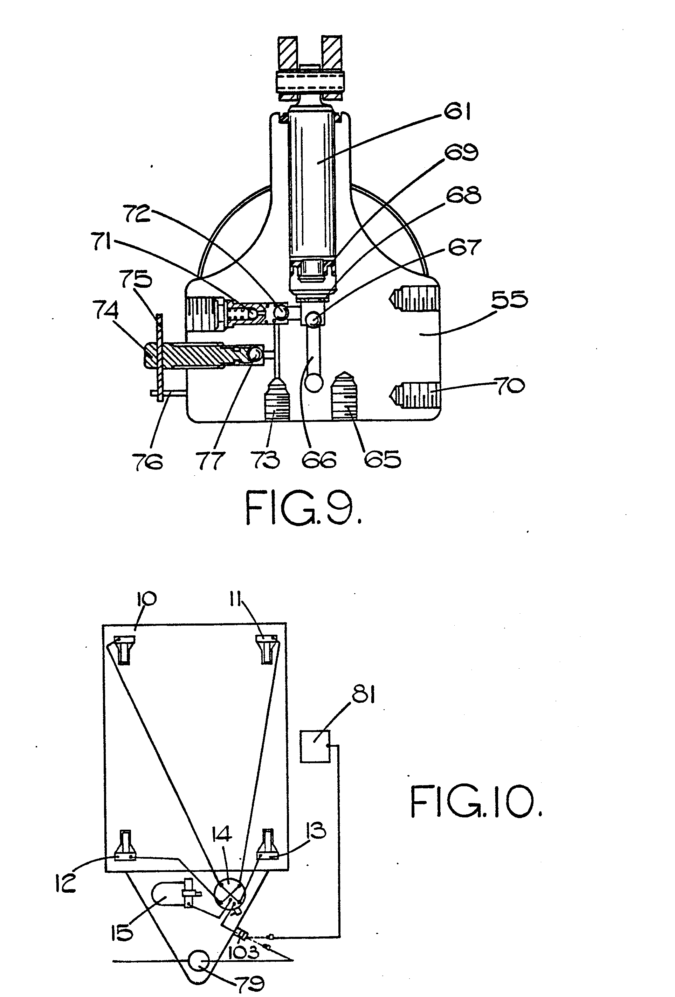

The system illustrated in the drawings is intended for stabilizing and levelling a caravan or trailer particularly a two-wheeled touring caravan, and as seen if Figure 10 includes four fluid pressure operated legs 10, 11, 12, 13 positioned beneath respective corners of the caravan, and secured thereto, a control valve 14 and pumping means 15 arranged to deliver fluid under pressure to the control valve and thence selectively

0163544

to the four legs 10, 11, 12, 13.

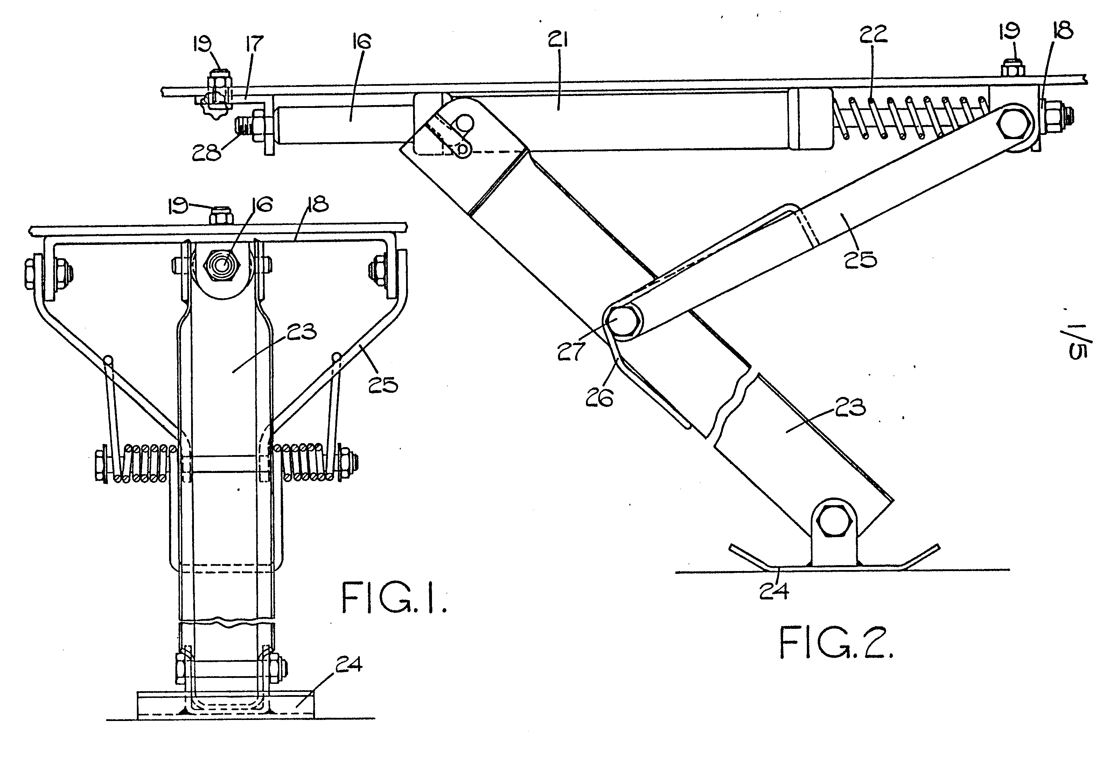

Figures 1 and 2 show one of the legs. This comprises a hydraulic piston and cylinder unit having a fixed piston rod 16 connected at its opposite ends to respective brackets 17, 18 securable by bolts 19 to the chassis of the caravan. The piston rod 16 is surrounded by a cylinder 21. One end of the piston rod 16 is narrower than the other and the narrower end may be surrounded by a coiled compression spring 22 urging the cyliner 21 towards one end of the piston rod 16. The cylinder is pivotally connected to a leg member 23 having a loosely pivoted foot 24 at its lower end. An arm 25 connects the leg member 23 near its mid-region to the fixed bracket 18 at one end of the piston rod 16. The arm is in the form of a pair of channel shaped members on which may be engaged the ends of a double torsion spring 26 which has a pair of coiled portions engaging on a bolt 27 which forms the pivot between the leg member 23 and the arm 25. The spring 22 may be omitted when the spring 26 is fitted, or vice versa.

The piston rod 16 at its larger end is hollow and terminates in a connector 28 whereby fluid under pressure can be introduced into the interior of the piston rod 16 and thence through a transverse port into the space between the interior of the cylinder 21 and the piston rod 16. Application of fluid under pressure serves to force the cylinder 21 against the compression spring 22 thus causing the leg member 23 to pivot away from the plane of the piston and cylinder unit and in use, therefore lowering the foot 24 downwardly. When it reaches the ground, the foot 24 takes up an appropriate angle in relation to the leg member 23 to provide even support. Continued application of fluid under pressure allows the caravan to be more heavily supported by further swinging movement of the leg member 23.

Upon release of hydraulic pressure the spring 22 (or the spring 26, whichever is fitted) acts to return the cylinder 21 towards the opposite end of the piston rod 16, thus retracting the leg member 23 until this takes up a position generally parallel with the length of the piston and cylinder unit. The leg member 23 is of channel shape and therefore in its fully retracted position substantially encloses the piston and cylinder unit and spring 22.

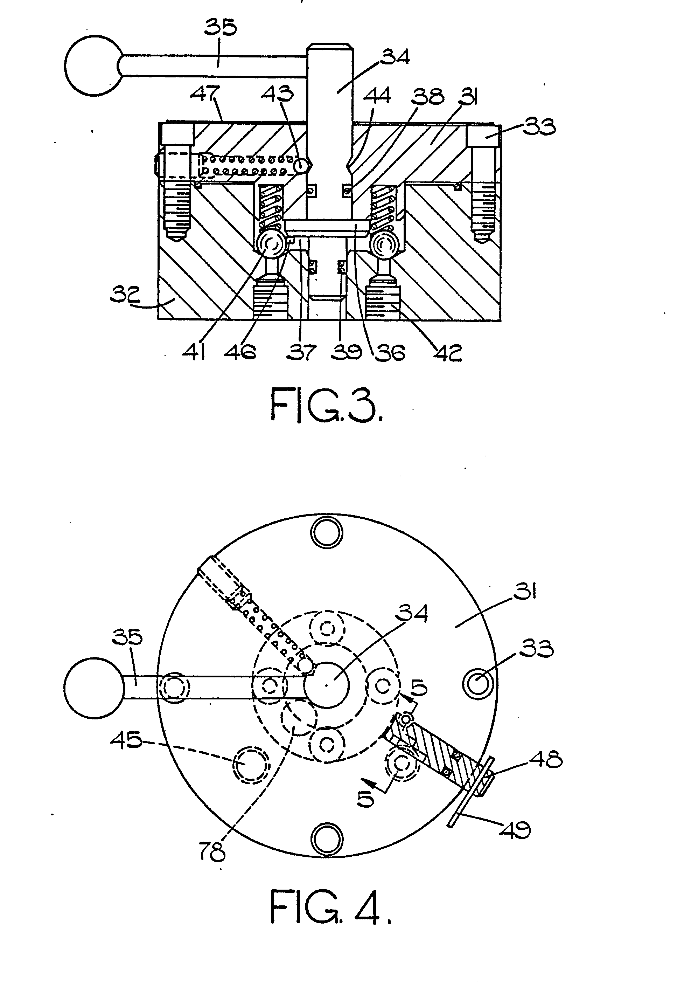

Hydraulic fluid is supplied to each of the four legs 10, 11, 12, 13 through the valve 14 which is shown in Figures 3 to 7. This comprises a two-part body 31, 32 secured together by bolts 33. The body is generally cylindrical and has a central bore occupied by a rotatable control member 34 having a leterally estending handle 35. The control member is a cylindrical part with an integral chamfered flange 36 within a cavity 37 in the body. The flange is flanked on the member 34 by respective seals 38 39. Four equally spaced spring-loaded balls 41 are equally spaced around the centre of the cavity 37 and serve normally to close respective outlet drillings 42 in the base of the body. A spring-loaded ball 43 in the part 31 of the body is engageable in respective detents 44 in the side of the control member 34 to retain this in a selected angular position. The lower part 32 of the body has an inlet drilling 45 through which fluid under pressure can be delivered from the pumping means 15. Fluid through this inlet drilling 45 can enter the cavity 37 within the body and can escape through any one of the four outlet drillings 42 in dependence upon the position of the control member 34. The control member chamfered flange 36 carries a cam 46 which can engage any one of the four balls 41 normally urged by their respective springs into engagement with respective seatings to close the outlet drillings 42.

In Figure 3 the cam 46 is shown engaging the left-hand ball 41 and this is dislodged from its seating so that fluid under pressure can pass the ball and flow from the cavity through the outlet drilling 42 associated with that ball.

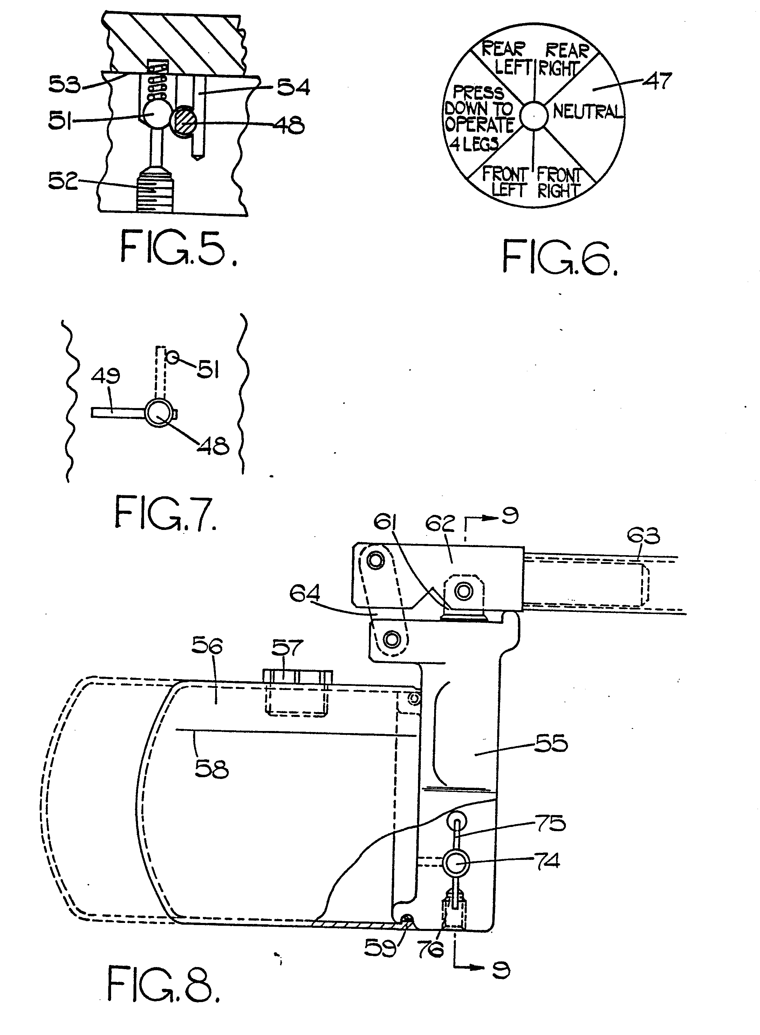

By this means fluid under pressure can reach a respective leg connected through a supply line from the appropriate outlet drilling 42. Figure 6 shows the indicator plate 47 of the control valve and it can be seen that there are four positions marked "Front left", "front right" "rear left", "rear right". There is also a neutral position where none of the balls is engaged by the cam 46.

It is also possible to open all four outlet drillings 42 simultaneously by moving all four of the balls 41 together. This is carried out by pushing the control member 34 downward, when in one position, as indicated in Figure 6 by the legend "Press down to operate four legs". The cam 46 is received in a suitably placed recess 78. The control member 34 moves downwardly until the flange 36 contacts and displaces all four balls 41. When all four legs contact the ground, fluid pressure inside the valve builds up and acts on the control member (through differing areas) and this raises it to allow all the four balls to return to their seatings, thus cutting off the supply of fluid.

The control valve also has an isolator switch shown in Figures 4 and 5. This comprises a radially extending rotatable rod 48 carrying an actuating bar 49. As seen in Figure 7 the actuating bar can be used to move the rod 48 through 90° and in one postion engages against a stop 51 in the side of the control valve body. In a perpendicular but offset drilling communicating with the drilling containing the rod 48 is a spring-loaded ball 51 arranged normally to close an outlet drilling 52. The ball communicates through a passage 53 with the cavity 37 in the interior of the control valve body. In the position shown, the isolator valve rod 48 has a flat, adjacent to the ball 51, so that there is no contact between these two parts. However rotation of the rod 48 brings the full diameter portion thereof into contact with the ball 51 thus moving it off its seating so that communication can take place between the interior cavity 37 in the control valve body and the outlet drilling 52. The outlet drilling is

0163544

connected to a quick release coupling 103. This quick release coupling 103 is a means of connecting either the axle levelling device 81 or jockey wheel 79 to a source of hydraulic fluid. Both male and female halves of the couplings are automatically sealed as soon as they are separated from each other but fluid may pass freely when couplings are locked together. To retain rod 48 in the isolator valve body but permitting its rotation there is a pin 54 occupying a drilling and engaging in a groove near the inner end of the rod 48.

The pumping means 15 is shown in Figures 8 and 9 and comprises a body 55 to which is attached a reservoir 56. As shown two different reservoir sizes may be fitted, depending on the capacity of the system. A filler plug 57 and level indication 58 are provided on the reservoir. The reservoir is secured to the body 55 and a seal 59 is fitted between them.

The body 55 has a vertical plunger 61 slidably mounted within it. The upper end of the plunger extends out of the body and is pivotally connected to a forked end of a member 62 onto an extension of which an actuating tube 63 is slidably fitted. The extremity of the forked end of the member 62 is connected by a link 64 to the body 55 of the pumping means. The body also has an integral stop to limit movement of the member 62. It is possible to raise and lower the plunger by means of the actuating tube 63 and this is used to generate pressure of the fluid taken from the reservoir 56 and delivered through an outlet connection drilling 73 in the body 55.

A right angled drilling 66 communicates with the reservoir and allows fluid to flow from the reservoir to a central cavity in the body, but only when a ball 67 is off its seating at the end of the drilling 66. The cavity has a restrictor 68. When the plunger 61 is raised, the low pressure produced lifts the ball 67 off its seating and thus allows fluid to be drawn into the cavity. When the plunger 61 is then pushed in again the pressure of the fluid increases and first presses the ball 67 against its seating thus preventing the fluid returning to the reservoir. The pressure lifts spring loaded ball 72 in a side drilling off its seating, allowing fluid to flow to the outlet drilling 73.

If the pressure exceeds a designed maximum, for example 2500 p.s.i., the relief valve 71 is actuated to allow excess fluid to flow through a drilling (not seen) in the body, to return to the reservoir 56.

In a further side drilling which communicates with the outlet drilling 73 is a screwed rod 74 projecting outside the body 55. In the other end of the rod is a bar 75 which can engage a stop 76. The screwed rod 74 acts on a ball 77 closing a passage (not shown) leading to the reservoir 56. When the legs are to be raised, the rod 74 is turned to allow the ball 77 to lift off its seating. Fluid is forced, by the spring-urged legs, through the outlet drilling 73, past the ball 77 to the reservoir 56.

Screw threaded holes 70 in the body 55 allow for securement of this to the caravan, usually to the towing

0163544

bracket or other adjacent portion.

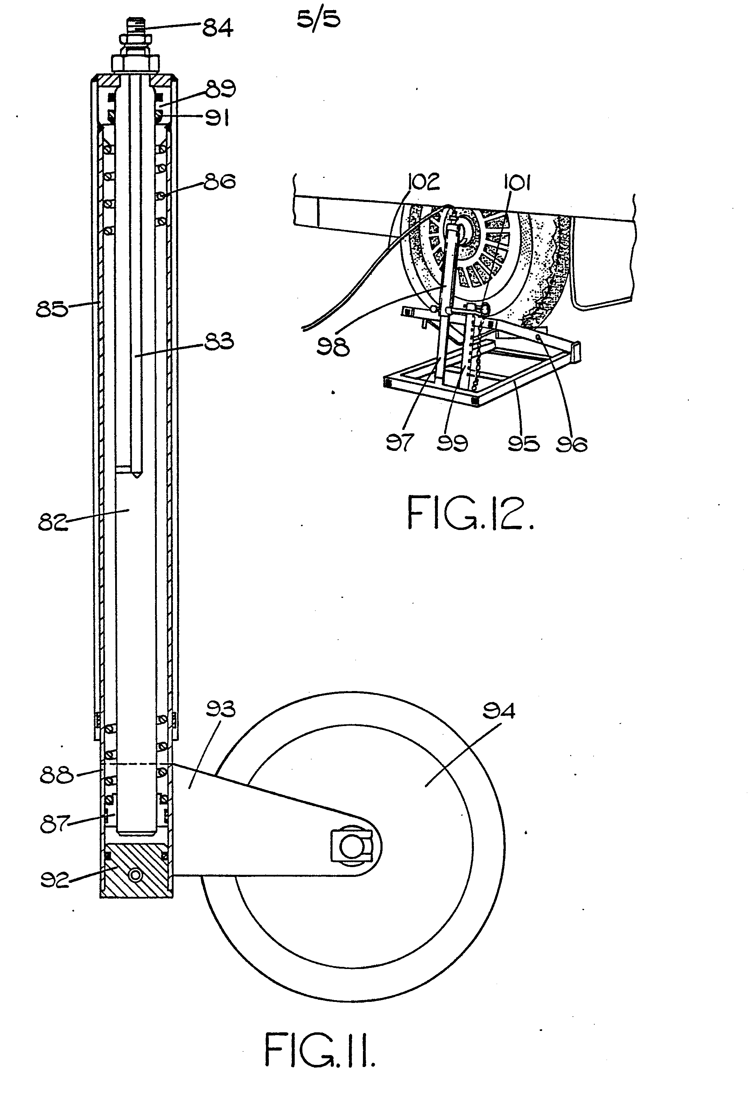

Figure 11 shows the jockey wheel, comprising a hydraulic piston and cylinder unit having an internal piston rod 82 having a central fluid inlet drilling 83 over part of its length and extending to one end. The same end carries a connector 84 to a supply pipe whereby fluid under pressure is delivered to the unit. Also connected to the piston rod, at the same end, is an outer sleeve 85 somewhat shorter than the piston rod 82. A coiled compression spring 86 surrounds the piston rod 82 and bears, at one end, against a spring abutment 87 secured to the piston rod free end. The spring abutment 87 engages internally in a cylinder 88 which is slidably and telescopically engaged in the outer sleeve 85. To the end of the cylinder 88, at one end, there is secured a member 89 carrying seals 91 which bear on the piston rod 82. At the other end the cylinder 88 carries a plug 92 and to this end is also connected a bracket 93 including forks, at the outer ends of which is pivoted a wheel 94. In use, the unit is secured to the caravan chassis usually near to the A-frame or other towing connection and the unit can be expanded so that the wheel 94 engages the ground or can be retracted under the influence of the spring 86 when fluid pressure is relieved. The jockey 94 can swivel about the vertical axis of the unit as required. This is used to level the caravan in fore and aft direction.

Figure 12 shows the axle levelling device 81. This comprises a base frame 95 to one end of which is pivotally connected a further frame 96. Interconnecting the other ends

0163544

of the base and further frame 95 and 96 is a fluid pressure operated piston and cylinder unit of which the piston rod 97 is connected to the base frame 95 and the cylinder 98 is connected to the further frame 96. In parallel with the piston and cylinder unit there is a post 99 secured to the base frame 95 and having a series of holes in which a locking pin 101 can be selectively engaged to secure the device in any required expanded position so that reliance is not placed permanently upon the hydraulic cylinder unit. A supply pipe 102 to the top of the cylinder 98 is shown and this is connected to the quick release coupling 103 already referred to .

Quick release coupling 103 enables the fluid connections to the jockey wheel 79 and to the axle levelling device 81 to be engaged and released in a convenient way. Such quick release arrangements include automatic shut-off valves when the relevant pipes are detached.

Other forms of fluid pressure operated legs and other devices may be substituted for those shown in the drawings and described herein. The system can also be used on trailers of various kinds, besides caravans, as described.

## CLAIMS

1.      A stabilizing system for caravans and trailers comprising a number of individual fluid pressure actuated legs designed to be fitted to a caravan or trailer at spaced positions thereon, a control valve for regulating the supply of fluid under pressure to the respective legs and a pumping means for supplying fluid under pressure to said control valve.

2.      A system as claimed in claim 1 in which the control valve can be set to provide supply to the legs individually or simultaneously.

3.      A system as claimed in claim 1 or claim 2 in which the legs are spring urged towards their retracted positions, and are arranged to be extended by application of fluid under pressure.

4.      A system as claimed in any one of the preceding claims in which a jockey wheel, having a fluid pressure actuated means whereby it can be raised and lowered, is actuable by the control valve.

5.      A system as claimed in any one of the preceding claims in which an axle levelling device, having a fluid pressure actuated means whereby it can be operated, is actuable by the control valve,

6.      A system as claimed in any one of the preceding claims in which the control valve includes a body, within which are defined passages, communicating in use with the respective legs, the passages being controlled by valves which can be actuated through a rotary member and and capable of controlling flow through the passages individually or simultaneously.

7.      A system as claimed in any one of the preceding claims in which the control valve includes an isolator switch.

FIG.3.

FIG. 4.

53
54
51
48
52

## FIG.5.

REAR
LEFT

REAR
RIGHT

47

PRESS
DOWN TO
OPERATE
4 LEGS

NEUTRAL

FRONT
LEFT

FRONT
RIGHT

## FIG.6.

49
51
48

## FIG.7.

61
62
9
63
64
56
57
55
58
75
74
59
76
9

## FIG.8.

FIG.9.

FIG.IO.

84

89

91

86

85

83

82

93                94

88

87

92

FIG.11.

102    101

98

97   99   95   96

FIG.12.